# EUROPEAN PATENT APPLICATION

(11) **EP 1 698 768 A1**
(43) Date of publication of application: **06.09.2006**
(21) Application number: 06004276.9
(22) Date of filing: 02.03.2006
(51) Int. Cl.: F01N 3/20, F02M 61/16, F02M 61/18

(54) **Injection device for the treatment of exhaust fumes motor vehicles**

(30) Priority: 02.03.2005 US 658352 P
(71) Applicant: HYDRAULIK-RING GMBH, 97828 Marktheidenfeld (DE)
(72) Inventor: Johnston, Jeff, North Muskegon, MI (US); Kowall, Cliff, South Euclid, OH (US); Maisch, Dieter, 72664 Kohlberg (DE); Bleek, Matthias, 63739 Aschaffenburg (DE)
(74) Representative: Jones Day

(57) **Abstract**

A device for injecting at intermittent periods a dispersion of a liquid at controlled pulsing periods into exhaust fumes of a combustion engine, said liquid contains a component which reacts with a component of the exhaust fumes at a catalytic converter, said device comprises
a housing containing
a first chamber
a means for supplying the liquid into a first chamber
a means for pumping the liquid from the first chamber into a pressure swirl atomizer where the liquid is dispersed, said swirl atomizer comprising an outlet nozzle leading the dispersion into an exhaust manifold through which the exhaust fumes are directed prior to being converted at the catalytic converter, said device further comprises a means for controlling the means for pumping such that a pulsing period during which the liquid is injected into the swirl atomizer is controlled to be from about 1 to about 1000 milliseconds as well as a method for injecting a dispersion of a liquid into exhaust fumes of combustion engines.

## Description

### FIELD OF THE INVENTION

The invention relates to an injection device for injecting a dispersion of an active component into exhaust fumes, in particular exhaust fumes from combustion engines, in particular diesel engines, for the catalytically reduction of the levels of unwanted components, in particular nitrogen oxides, from the exhaust fumes.

### BACKGROUND OF THE INVENTION

There is an increasing demand in a significant reduction of nitrogen oxide emissions from combustion engines, in particular from diesel combustion engines, in motor vehicles, such as for examples trucks, passenger cars, and motor bikes. The nitrogen oxide content in exhaust fumes can be reduced by selective catalytic reduction (SCR) wherein the exhaust fumes are directed together with an aqueous urea solution over a catalytic converter. At the converter the reaction of nitrogen oxides with the urea solution to less toxic compounds is catalysed. A fine dispersion of the aqueous urea solution in the exhaust fumes is required for achieving a most efficient conversion. The amount of urea solution required for efficient conversion depends on the operation status of the vehicle. Therefore, the urea solution is injected into the exhaust fumes intermittently and in small doses, which requires precise and homogeneous dosing and reproducible pulsing.

In common exhaust treatment systems using SCR for reducing the nitrogen oxide levels the required amount of the aqueous urea solution is pumped from a storage tank and introduced into the exhaust fumes by means of an injection valve at a certain pressure. For an efficient conversion of nitrogen oxide to be achieved the aqueous urea solution must be finely dispersed when it joins the exhaust fumes. In the injection valves of the prior art dispersion of the aqueous urea solution is achieved by introducing compressed air into the urea solution upon which a fine dispersion may be formed. The use of compressed air is costly and furthermore makes necessary the use of additional components and specific configurations of the injection valve.

Other devices avoid the use of compressed air by using an orifice plate or metal diaphragma for the generation of a dispersion. In these devices the urea solution is fed through the orifice plate or the diaphragma at high pressures upon which a dispersion is formed.

Several disadvantages are associated with this approach. For generating a fine dispersion using orifice plates or metal diaphragma comparatively high pressures need to be applied. As a consequence, the materials of which the injection valve is made must withstand these pressures. Therefore, inexpensive materials, such as components made of plastic or rubber may not be used. Instead rather expensive materials such as for example steel may be required for the fabrication of the injection valve or its components. Additionally, the use of orifice plates or diaphragmas requires the injection valve to have a comparatively large inner volume such that the required pressures can be realized. This again may add to the fabrication costs of the device. Moreover, standard urea solutions used for the catalytic conversion of nitrogen oxides in exhaust fumes using SCR may contain up to 65% water. Due to the high water content the urea solution freezes at low temperatures. Freezing of the solution impacts the efficiency and may even damage components of the injection device. Reducing the volume of the injection valve is one way of avoiding premature freezing of the solution.

It is an object of the present invention to provide a device for injecting a fine dispersion of a liquids into exhaust fumes of combustion engines, in particular diesel combustion engines, that is constructively simple and inexpensive.

It is another object of the present invention to provide a device for injecting a fine dispersion of liquids into exhaust fumes of combustion engines, in particular diesel combustion engines, that allows the intermittent injection of the dispersion at short pulsing periods.

It is a further object of the present invention to provide a device for injecting a fine dispersion of a liquid into the stream of exhaust fumes of combustion engines, in particular diesel combustion engines, that operates at low pressures, i.e. pressures above 1 but less than 10 bar, preferably less than 5 bar allowing for the use of cheap materials (like plastic and rubber) in the fabrication of the device.

It is also an object of the present invention to provide a method for injecting a fine dispersion of a liquid into the exhaust fumes of combustion engines, in particular diesel combustion engines, wherein the liquid is injected intermittently in low amounts.

It is also an object of the present invention to provide a method for injecting a fine dispersion of a liquid into the exhaust fumes of combustion engines, in particular diesel combustion engines, wherein the device has a reduced inner volume (i.e. a reduced volume of the chamber receiving the liquid from the supply means and from which the liquid is fed into a dispersion chamber where it is dispersed) for avoiding premature freezing of the solution.

### SUMMARY OF THE INVENTION

This invention describes apparatus and methods for injecting a fine dispersion of a liquid into exhaust fumes from combustion engines, in particular diesel combustion engines.

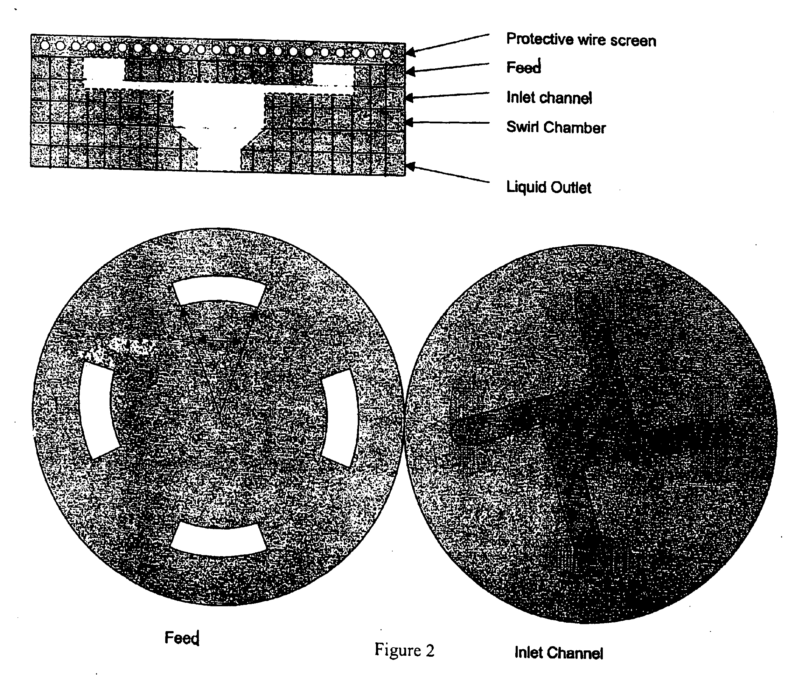

Accordingly, in a first embodiment the invention comprehends a device for injecting a fine dispersion of liquid into exhaust fumes of combustion engines, said device comprising a means for supplying a liquid, in particular an aqueous urea solution, a pumping means for directing the liquid into a pressure swirl atomizer where the liquid is dispersed, and an outlet through which the dispersion is fed into an exhaust manifold prior to the exhaust fumes being directed over a catalytic converter. The device further comprises means for controlling the pumping means such that the liquid is intermittently and reproducibly pulsed into the pressure swirl atomizer allowing for the dosage of the liquid that is fed into the pressure swirl atomizer to be precisely metered. The pressure swirl atomizer allows for a dispersion to be formed through directing the liquid through tangential pathways prior to directing it again through an axial pathway before the outlet at appropriate pressure and geometrical configuration.
The pressure swirl atomizer according to the invention is a liquid only system, i.e. the dispersion is formed without the addition of a second fluid medium such as for example compressed air. Such liquid-only pressure swirl atomizers are known but have been only used in applications of permanent or comparatively long pulsing periods. An example of a suitable liquid only pressure swirl atomizer is shown in figure 2.

It was surprisingly found that a pressure swirl atomizer can be used in an application where short pulsing period, precise dosing and relative low operating pressures might be required.

Examples of suitable components of the injection device -with the exception of the pressure swirl atomizer and the outlet nozzle- such as for example pumping means, controlling means, housing, actuating means and their suitable configuration are disclosed in US 2004/0103641 A1 and may also be used in the device according to the invention. The content of US 2004/0103641 A1 is incorporated herein by reference.

The liquid to be injected may be any aqueous, Newtonian liquid that may be needed to achieve a catalytic conversion of a toxic component in exhaust fumes of combustion engines. Thus, the invention also contemplates the device for other catalytic conversion systems that require the addition of a dispersion to a gas stream other than nitrogen oxide reduction by SCR.

A preferred liquid according to the invention is an aqueous urea solution.

The toxic component of the exhaust fumes may be any toxic component but preferably is a nitrogen oxide, preferably a mixture of nitrogen monooxide and nitrogen dioxide. The treatment of the exhaust fumes preferably comprises the reduction of nitrogen oxide levels. The catalytic converter is a catalytic reduction converter as known in the art. The invention also contemplates other catalytic conversion systems in which a liquid is to be added intermittently to reduce the amount of unwanted, preferably toxic, components in exhaust fumes.

The injection of the dispersed liquid into the exhaust fumes is carried out at intermittent periods. Typical periods are 1 to 1000 preferably 10 to 100 milliseconds.

The amount of liquid injected into the pressure swirl atomizer is typically from about 0.1 to about 10 milligram per millisecond, preferably from about 0.1 to about 2 milligram per millisecond, more preferably from about 0.5 to about 1.5 milligram per millisecond.

The amount of the dispersed liquid injected into the exhaust fumes are typically from about 0.1 to about 10 milligram per millisecond, preferably from about 0.1 to about 2 milligram per millisecond, more preferably from about 0.5 to about 1.5 milligram per millisecond.

The operation pressure, i.e. the pressure at which the liquid fed into the pressure swirl atomizer is typically from more than 1 to about 20 bar, preferably from about 2 to less than about 6 bar, preferably less than about 5 bar.

By reducing the amount of pressure necessary for injecting the liquid into the dispersing means, i.e. the pressure swirl atomizer or to obtain a fine dispersion of that liquid, materials can be used which allow a cost effective construction of the injection device, such as for example rubber, plastic, rubber tubing, plastic tubing. Also the construction of smaller sized pumping means and chambers comprising these pumping means may be possible. Thus, the device or one or more of its components may be made of cheaper materials, and the components or even the entire device may be reduced in size or volume. Preferably at least one of the following components of the device according to the invention is made of plastic:
the pumping means, at least one component of the pumping means, the pressure swirl atomizer, at least one component of the pressure swirl atomizer, the liquid supply means, at least one component of the liquid supply means, tubing, a sealing means, the housing.

The invention also relates to a method of reducing the levels of nitrogen oxides in exhaust fumes of combustion engines in motor vehicles, comprising the steps of
(i) leading the exhaust fumes over a selective catalytic reduction converter which converts the nitrogen oxides in the presence of at least another reactive component into components that are less toxic to humans than nitrogen oxide, and wherein the other reactive component is added as a dispersion of a solution containing said reactive component,
(ii) forming a dispersion by pumping the solution containing the reactive component at controlled amounts and during controlled pulse periods into a pressure swirl atomizer
(iii) directing the dispersion into the stream of exhaust fumes before it contacts the catalytic converter.
   The indications given wit respect to the device also apply for steps of the process of the invention, in particular apply the pulse periods, operation pressure, and the amount of liquid injected or dispersed.

### BRIEF DESCRIPTION OF THE DRAWINGS

**FIG. 1** shows an axial section of a part of an embodiment of an injection device according to the invention.
**FIG. 2** shows an embodiment of a suitable pressure swirl atomizer. At the top a cross-section of the pressure swirl atomizer is shown (viewed from its side), on the bottom left the feed section is shown as viewed from top and on the bottom right the inlet section is shown as viewed form the top.
**FIG 3** shows the feed section of the pressure swirl atomizer of figure 2(on the left) and an adaptor plate (on the right).
**FIG 4** shows an enlarged section of pressure swirl atomizer build in the device as shown in figure 1.

### DETAILED DESCRIPTION OF THE FIGURES

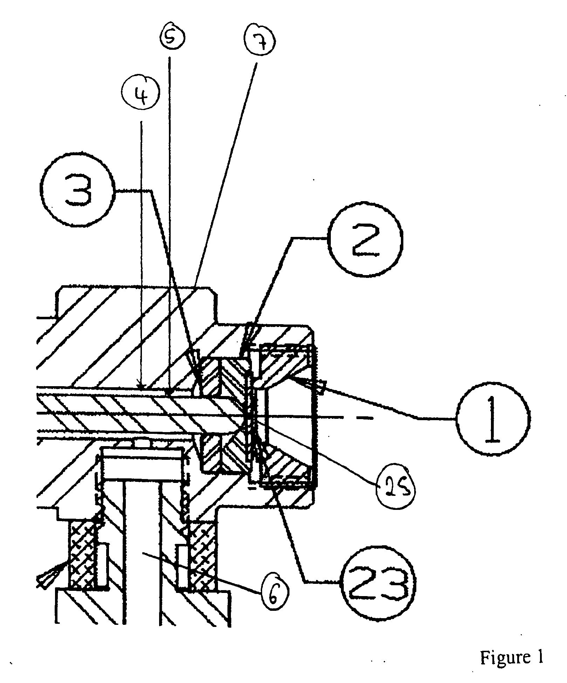

**Figure 1** shows a part of an embodiment of a device for injecting a dispersion into a stream of exhaust fumes for the treatment of exhaust gasses. The dispersion (in this case a dispersion of an aqueous urea solution) is injected into an exhaust manifold (not shown) via the valve spray nozzle **1**. The dispersion is generated in the pressure swirl atomizer **25** resting on an adapter plate **23** in the valve seat **2.** The manifold (not shown) contains a catalytic converter for the selective catalytic reduction of nitrogen oxides in the presence of an aqueous urea dispersion.

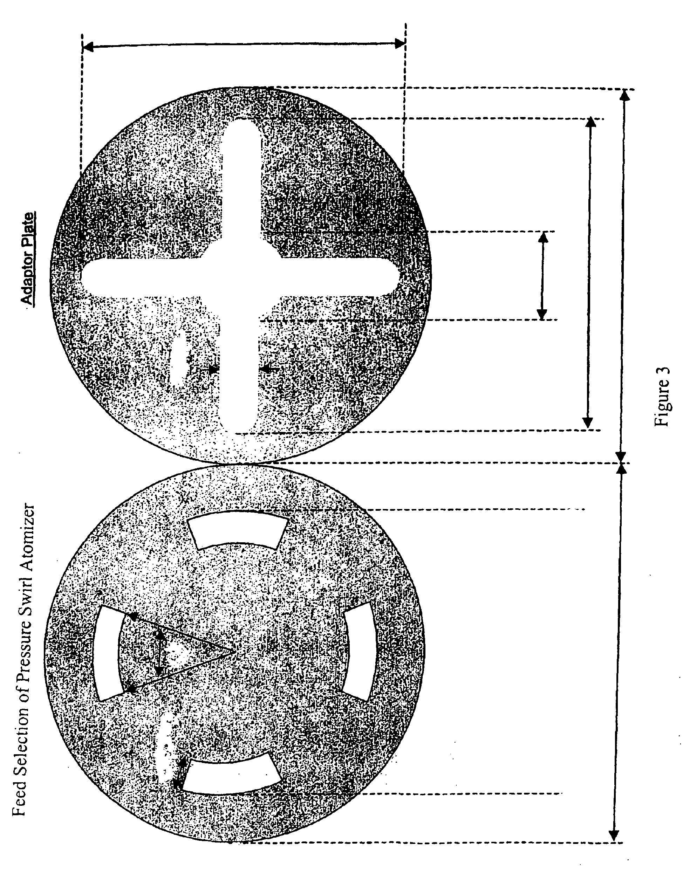

The liquid (in this case an aqueous urea solution) is feed into the first chamber **4** via the supply means **6** connected to the housing **7.** This figure shows one supply means only but several supply means are also contemplated. The liquid can be introduced into the first chamber already as a mixture but the invention also contemplates to introduce several liquids into the chambers such that mixing can take place in that chamber. In the first chamber there is the piston **5** which functions as a pumping means. The piston is pressed against an adapter plate **23** in the closed position. The adapter plate is shown figure 3 and provides optimal transfer of the liquid into the pressure swirl atomizer **25.** The use of an adapter plate is optional and instead the pressure swirl atomizer can be configured such that optimal liquid transfer takes place.
The position of the piston (i.e. opening position or closed position) is controlled by one or more control devices (not shown) which may act on the piston, for example via a spring. Any known control device can be used (such as for example piezoelements, magnetic elements or eletromagnetic elements, possibly combined with transmitting elements) which allows reproducible and precise pulsing, i.e. the frequency and the speed at which the piston is moved back from and towards the pressure swirl atomizer (leading to injection of liquid in the pressure swirl atomizer and to injection of the dispersion into the exhaust fumes, respectively. In the opening position the piston may be pushed (caused by a suitable control device, e.g. by a magnetic or electromagnetic attraction force) against a spring. If the force pushing the piston against the spring ceases (again caused by the control device) the piston is driven by the tension of the spring towards the adaptor plate and pressure swirl atomizer, respectively, forcing the liquid which in the meantime has been injected into the first chamber through the supply means into the pressure swirl atomizer.

The device as shown in figure 1 further comprises various sealing components for ensuring that no liquid leaks form the device.

**Figure 2** shows an embodiment of a pressure swirl atomizer The liquid is introduced into the atomizer via the feed channels of the feed section. Tangential energy is added to the liquid when it reaches the inlet channel section which directs the flow path perpendicular to the feed flow path. In the swirl chamber the flow path is then changed again perpendicularly to the inlet channel flowpath when the outlet section is reached. The generation of the tangential energy leads to the formation of a dispersion in a liquid only system i.e. without the addition of compressed air or presence of another fluid medium. The pressure swirl atomizer shown in figure 2 represents a particular embodiment only. Any known suitable pressure swirl atomizer for liquid only systems may be used. Those pressure swirl atomizers can be integral structures made from a single mold or can be composite structure made from several materials and components. A geometrical configuration of the pressure swirl atomizers different to the one shown in figure may also be suitable, for example can the tangential pathway be comprised of curved of flat channels. There may also be more than four channels shown in the atomizer of figure 2.

**Figure 3** shows an adaptor plate (right) viewed from top next to inlet channel section (left) viewed from top.

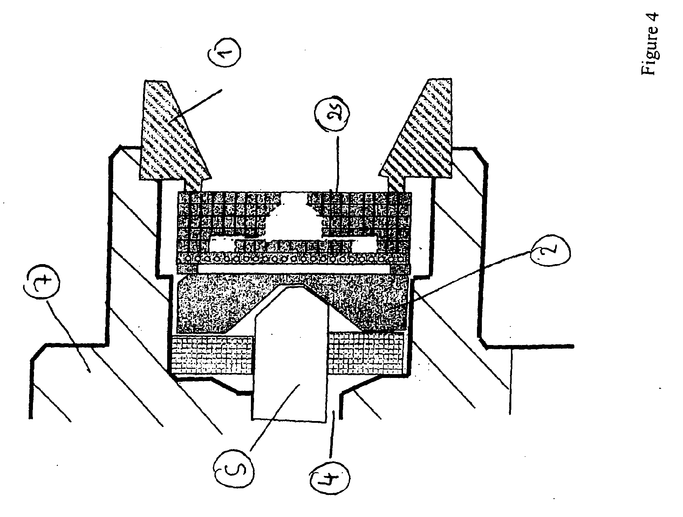

**Figure 4** shows the embodiment of the pressure swirl atomizer as shown in figure 2 in the valve seat of figure of the device shown in figure 1. The valve seat has an aperture for allowing the liquid to pass through the adaptor plate into the pressure swirl atomizer.

## Claims

**1.** A device for injecting at intermittent, controlled pulsing periods a dispersion of a liquid into exhaust fumes of a combustion engine, the liquid containing a component which reacts with a component of the exhaust fumes at a catalytic converter, said device comprises
a housing,
a first chamber,
a means for supplying the liquid into a first chamber,
a means for pumping the liquid from the first chamber into a pressure swirl atomizer where the liquid is dispersed, said atomizer from which the dispersion is fed into an exhaust manifold through which the exhaust fumes are directed prior to being converted at the catalytic converter, said device further comprises a means for controlling the means for pumping such that a pulsing period during which the liquid is injected into the swirl atomizer is controlled to be from about 1 to about 1000 milliseconds.

**2.** The device of claim 1 wherein the pulsing period is from about 10 to about 100 milliseconds.

**3.** The device of claim 1 wherein during a pulsing period from about 0.1 to about 5 mg liquid are dispersed per millisecond.

**4.** The device of claim 1 wherein during a pulsing period from about 0.5 to about 1.5 mg liquid are dispersed per millisecond.

**5.** The device of claim 1 wherein the liquid is dispersed in an amount of from about 0.1 to about 1.5 mg per millisecond.

**6.** The device of claim 1 wherein the pressure swirl atomizer is connected to the first chamber via an adapter plate.

**7.** The device of claim 1 wherein the liquid is fed into the pressure swirl atomizer at a pressure of from about 1.2 to about 6 bar.

**8.** The device of claim 1 wherein the liquid is fed into the pressure swirl atomizer at a pressure of from about 1.2 to about 5 bar.

**9.** A device for injecting at intermittent periods a dispersion of a liquid at controlled pulsing periods into exhaust fumes of a combustion engine, said liquid contains a component which reacts with a component of the exhaust fumes at a catalytic converter, said device comprises
a housing,
a first chamber,
a means for supplying the liquid into a first chamber,
a means for pumping the liquid from the first chamber into a pressure swirl atomizer where the liquid is dispersed, said swirl atomizer comprising an outlet nozzle leading the dispersion into an exhaust manifold through which the exhaust fumes are directed prior to being converted at the catalytic converter, said device further comprises a means for controlling the means for pumping such that a pulsing period during which the dispersion is injected into exhaust fumes is from about 1 to about 1000 milliseconds.

**10.** The device of claim 9 wherein the pulsing period is from about 10 to about 100 milliseconds.

**11.** The device of claim 9 wherein during a pulsing period from about 0.1 to about 5 mg liquid are dispersed per millisecond.

**12.** The device of claim 9 wherein during a pulsing period from about 0.5 to about 1.5 mg liquid are dispersed per millisecond.

**13.** The device of claim 9 wherein the liquid is dispersed in an amount of from about 0.1 to about 1.5 mg per millisecond.

**14.** The device of claim 9 wherein the pressure swirl atomizer is connected to the first chamber via an adapter plate.

**15.** The device of claim 9 wherein the liquid is feed into the pressure swirl atomizer at a pressure of from about 1.2 to about 6 bar.

**16.** The device of claim 9 wherein the liquid is feed into the pressure swirl atomizer at a pressure of from about 1.2 to about 5 bar.

**17.** A method of injecting a fine dispersion of a liquid into exhaust fumes of a combustion engine during intermittent pulse periods said method comprising the step
pumping a solution at controlled pulse periods through a pressure swirl atomizer, wherein the pulse periods are from about 1 to about 1000 milliseconds.

**18.** The method of claim 17 wherein the liquid is an aqueous urea solution

**19.** The method of claim 17 wherein the liquid is an aqueous solution and wherein from about 0.1 to about 5 mg/millisecond of said solution are pumped through the pressure swirl atomizer during a pulse period.

**20.** The method of claim 17 wherein the liquid is an aqueous solution and wherein from about 0.1 to about 1 mg/millisecond of the solution are pumped through the pressure swirl atomizer during a pulse period.

**21.** A method of reducing the levels of nitrogen oxides in exhaust fumes of combustion engines in motor vehicles, comprising the steps of
(i) leading the exhaust fumes over a selective catalytic reduction converter which converts the nitrogen oxides in the presence of at least another reactive component into components that are less toxic to humans than nitrogen oxide, and wherein the other reactive component is added as a dispersion of a solution containing said reactive component,
(ii) forming a dispersion by pumping the solution containing the reactive component at controlled amounts and during controlled pulse periods into a pressure swirl atomizer
(iii) directing the dispersion into the stream of exhaust fumes before it contacts the catalytic converter.

**22.** The method of claim 21 wherein the amount of liquid pumped into the pressure swirl atomizer is from about 0.1 to about 5 mg per millisecond of the pulse period.

**23.** The method of claim 21 wherein the amount of liquid pumped into the pressure swirl atomizer is from about 0.5 to about 1.5 mg per millisecond of the pulse period.

**24.** The method of claim 21 wherein the pulse period is from about 1 to about 1000 milliseconds.

**24.** The method of claim 21 wherein the pulse period is from about 10 to about 100 milliseconds.

**25.** The method of claim 21 wherein the liquid is pumped into the pressure swirl atomizer at an operating pressure of from about 1.2 to about 6 bar.
